# FASCICULE DE BREVET EUROPEEN

(11) **EP 3 154 332 B1**
(45) Date de publication et mention de la délivrance du brevet: **12.09.2018**
(21) Numéro de dépôt: 15753099.9
(22) Date de dépôt: 09.07.2015
(51) Int. Cl.: A01G 20/00, A01G 7/04, A01G 9/26

(54) **DISPOSITIF POUR LE TRAITEMENT DU GAZON PAR LUMINOTHÉRAPIE**
VORRICHTUNG ZUR BEHANDLUNG EINER GRASFLÄCHE UNTER VERWENDUNG VON LICHTTHERAPIE
DEVICE FOR TREATING A GRASS AREA USING LIGHT THERAPY

(30) Priorité: 17.07.2014 FR 1456925
(43) Date de publication de la demande: 19.04.2017
(73) Titulaire: Etablissements Sparfel, 29260 Ploudaniel (FR)
(72) Inventeur: SPARFEL, Jean-Claude, 29670 Taule (FR); FREREUX, Clément, 29200 Brest (FR)
(74) Mandataire: Ipside
(86) Numéro de dépôt international: PCT/FR2015/051902
(87) Numéro de publication internationale: WO 2016/009136

(56) Documents cités:
- EP-A1- 2 710 884
- WO-A1-2012/147391
- DE-A1-102004 019 049
- US-A1- 2001 035 468

## Description

La présente invention appartient au domaine des infrastructures sportives et plus particulièrement, mais non exclusivement, au domaine des terrains de sport utilisés en extérieur tels que les terrains de football, ou les courts de tennis, et plus généralement aux espaces comportant des pelouses, tels que les espaces verts.

Les infrastructures sportives extérieures, tels que les stades, sont soumis aux aléas climatiques. Or, la rentabilité de ces installations passe par la capacité de les utiliser le plus de jours possibles dans l'année, et ainsi de disposer d'un terrain de souplesse appropriée et correctement couvert par du gazon, quelques soient la température et l'ensoleillement.

Les pelouses, et en particulier certaines zones du terrain, sont très sollicitées par les joueurs, ce qui impose un entretien régulier en ayant recours à des méthodes qui stimulent la repousse de l'herbe. D'autres zones du terrain, qui ne bénéficient pas des apports suffisants en termes de rayonnements nécessaires à la photosynthèse pour la croissance, tel que les parties ombragées par des tribunes, sont difficiles à maintenir en bon état.

Des systèmes mobiles équipés de lampes pour l'éclairage et le chauffage du gazon sont connus, comme par exemple le système divulgué dans les demandes US 2001/0035468 et WO 2012/147391. Un tel système requiert une surveillance continue des opérateurs qui doivent orienter, ou guider, son positionnement en fonction des besoins sur le terrain engazonné.

De tels systèmes mobiles sont connus par ailleurs, ils portent des lampes à sodium dont le rôle est d'améliorer la qualité de la coloration du gazon qui doit rester bien vert. Ces lampes à sodium, érigées à plusieurs mètres du sol, ne permettent ni de chauffer suffisamment le sol pour améliorer la croissance du gazon, ni de pouvoir générer un faisceau lumineux apte à favoriser la photosynthèse dans de bonnes conditions.

La présente demande vise à remédier aux inconvénients de l'art antérieur.

Ainsi, pour pallier les insuffisances de l'état de la technique du domaine, la présente invention concerne, selon un premier aspect, un dispositif pour la luminothérapie et le chauffage d'un couvert végétal ou de massifs d'algues, comprenant une lampe apte à activer la photosynthèse, un châssis portant ladite lampe, un moyen de déplacement motorisé monté sur le châssis, dans lequel le dispositif comporte un moyen de guidage, un moyen de commande du moyen de déplacement motorisé et un moyen de traitement de données, d'une part, prévu pour analyser au moins une première information de position du moyen de guidage et, d'autre part, configuré pour activer le moyen de commande du moyen de déplacement motorisé en fonction de l'information de position.

Un tel dispositif est utile pour l'entretien des gazons, tels que ceux qui équipent les infrastructures sportives, et permet d'activer utilement la photosynthèse des zones d'une pelouse qui en ont le plus besoin. L'éclairement optimal de cultures maraichères, sous serres par exemple, est réalisé également avec un tel dispositif, dont les moyens de déplacement motorisés servent utilement à régler la hauteur des lampes en fonction de la croissance des plantes, et à faire évoluer ces lampes sur le couvert végétal de manière contrôlée. D'autre part, un bassin dans lequel des algues sont en croissance éclairé à l'aide d'un tel dispositif selon un mode de réalisation flottant, convenablement orienté et propulsé à l'aide dudit moyen de déplacement motorisé, a une capacité de production supérieure aux cultures d'algues éclairées selon l'art antérieur.

Le moyen de déplacement motorisé est avantageusement un train roulant motorisé orientable, adapté pour évoluer sur les surfaces engazonnées, en limitant la pression au sol. En fonction des données acquises depuis le moyen de guidage, en réponse, le moyen de traitement de données, lequel est convenablement paramétré en prenant en compte les besoins sur la surface à traiter, pilote le moyen de commande du train roulant lequel actionne ses moteurs, et oriente le train roulant.

Le châssis comporte avantageusement un panneau rabattable qui porte ladite lampe. Un dispositif comportant de tels panneaux permet de relever une partie du châssis, facilitant ainsi le stockage du dispositif lorsqu'il n'est plus en fonctionnement pour traiter la végétation ou les algues.

Avantageusement, le châssis comporte une partie centrale, qualifiée de bloc central, qui s'étire le long d'un axe, et deux panneaux rabattables qui s'étendent de part et d'autre depuis ladite partie centrale. Dans ce cadre, le dispositif de luminothérapie est apte à passer d'une configuration d'utilisation pour lesquels les deux panneaux rabattables s'étendent dans le prolongement de la partie centrale du châssis, à une configuration de stockage pour laquelle les deux panneaux rabattables sont escamotés perpendiculairement à la partie centrale.

Le moyen de guidage peut être un système fonctionnant uniquement en réception d'ondes émises à partir d'une cible émettrice pour acquérir les données de localisation (par exemple depuis un satellite). Le moyen de guidage peut être aussi un système fonctionnant en émission à l'aide d'une source d'ondes, et en réception du train d'ondes émis retransmis par écho depuis une cible réfléchissante. Dans ce cadre, les cibles réfléchissantes doivent être convenablement positionnées sur le pourtour de la zone à traiter afin que le moyen de guidage puisse convenablement orienter le déplacement.

Les moyens de guidage et tout, ou partie, des moyens de traitement de données sont avantageusement intégrés dans un même boîtier. Par exemple, le moyen de guidage est un GPS, lequel intègre, en outre, des moyens d'analyse ou de traitement de données acquises à partir du satellite.

Grâce à un tel dispositif, il est possible d'automatiser le déplacement des rampes lumineuses mobiles sur le sol à traiter en fonction des besoins de celui-ci.

Le moyen de traitement de données est avantageusement prévu pour être positionné à distance du moyen de guidage et du moyen de commande avec lesquels il échange des données en réception et en émission par radiofréquence. Ainsi, on peut prévoir que le moyen de traitement de données est intégré à une base mobile que l'on peut déplacer sur le pourtour d'un terrain de sport.

Le moyen de traitement de données est avantageusement prévu pour analyser au moins une deuxième information de sens ou de direction.

Le moyen de traitement de données est avantageusement paramétré à l'aide d'une tablette tactile portée par le châssis, ou à l'aide d'un boîtier récepteur conçu pour intégrer des données émises depuis un téléphone portable. Un paramétrage adéquat permet d'enclencher des mesures d'urgences lorsqu'une anomalie de température, ou d'alimentation, est détectée.

Le moyen de guidage est avantageusement un système de guidage laser et/ou un système de positionnement par satellite, tel qu'un GPS (ou géolocalisation par satellite). Le guidage par GPS correspond à un système fonctionnant uniquement en réception d'ondes depuis un satellite. Le guidage laser correspond à un système qui émet au moins un train d'ondes qui est réfléchi sur une cible et retransmis sur un récepteur du système de guidage laser placé sur le dispositif selon l'invention.

Dans le cadre du guidage par GPS, un émetteur intégré dans le dispositif selon l'invention est avantageusement prévu, il communique continuellement avec une base mobile comportant le moyen de traitement de données installée à proximité du terrain. Une telle base mobile permet au dispositif de se repérer dans l'espace et de se déplacer de façon autonome. Le GPS du dispositif selon l'invention reçoit des informations concernant la position du châssis sur le terrain, ce qui lui permet de gérer le pilotage en donnant des ordres (tel que : changement de sens, modification de la direction, ...). Ceci est avantageusement permis grâce à la liaison présente entre les moteurs électriques et les organes de direction de la machine.

Le guidage laser s'effectue à l'aide d'un système de guidage laser qui intègre une source qui émet au moins un rayon laser en direction d'une cible située en pourtour du terrain. Ce rayon permet de gérer l'alignement du dispositif selon l'invention vis-à-vis de la cible, mais aussi de gérer sa position sur le terrain, car la source laser (qui peut fonctionner également en réception) reçoit la position en utilisant la vitesse de retour du faisceau ce qui lui permet de se repérer dans l'espace. Le dispositif se déplace sur la longueur (ou la largeur) du terrain, des récepteurs, ou cibles, étant placés à intervalles réguliers sur les largeurs (ou les longueurs) du terrain. Plusieurs dispositifs selon l'invention, peuvent être utilisés simultanément qui sont guidés à l'aide de telles cibles et gérés de façon indépendante.

Dans les deux cas, guidage laser et GPS, le système permet à la structure de fonctionner et de se déplacer de façon totalement autonome. De plus, il est possible de traiter chaque zone de terrain de façon indépendante, en ralentissant ou en accélérant la vitesse des dispositifs sur telle ou telle zone. Pour cela, il suffit à l'opérateur de paramétrer convenablement le moyen de traitement de données (ou outils de gestion) pour définir les zones et les temps de traitement.

Le moyen de guidage est avantageusement un système de guidage laser et le moyen de traitement de données est prévu pour analyser une information de vitesse du rayon lumineux (ou laser). Un tel fonctionnement permet d'obtenir une grande précision de lecture de la position du dispositif et permet d'éviter les éventuelles erreurs de fonctionnement. Un tel guidage grâce à l'emploi d'un laser permet un déplacement au centimètre près de la structure. Un même terrain peut ainsi être équipé avec plusieurs dispositifs comprenant un tel guidage laser, sans pour autant craindre une collision entre les différentes structures mobiles.

La lampe comprend avantageusement une diode électroluminescente (ou LED). L'utilisation d'une telle source lumineuse a pour avantage de garantir une durée de vie plus importante et de garantir une consommation électrique beaucoup plus faible que des lampes à sodium. Le spectre d'émission de la lampe est avantageusement de 350 et 450 nm et/ou de 520 à 710 nm. La lampe est idéalement composée d'un ensemble de LED, voire de micro-LED, émettant dans le bleu et/ou dans le rouge. Alternativement ou en combinaison, la puissance des lampes utilisées est avantageusement de 200 à 500 W/m². Un ensemble de LEDs disposées de manière linéaire dans une barrette est avantageusement utilisé.

Le dispositif selon l'invention comprend un système de chauffage. Le système de chauffage est avantageusement un propulseur d'air chaud. Ce propulseur pourra également servir à refroidir les différentes lampes.

Le dispositif selon l'invention intègre avantageusement des moyens d'injection de dioxyde de carbone afin de favoriser la croissance du tissu végétal. Des canalisations sont avantageusement utilisées pour l'injection d'air enrichi en dioxyde de carbone et préalablement chauffé. La concentration de dioxyde de carbone dans l'air injecté est avantageusement de 500 à 2000 ppm. Pour des valeurs inférieures à 500 ppm, la concentration n'est pas suffisante pour provoquer une croissance optimale du gazon. Pour des valeurs supérieures à 2000 ppm, on observe un fort taux d'anomalies qui sont attribués pour la plupart à un excès d'amidon, à l'obstruction des stomates ou à la baisse du taux d'assimilation du dioxyde de carbone. La concentration en dioxyde de carbone est avantageusement de 750 à 1750 ppm, voire de 1000 à 1500 ppm. Le dioxyde de carbone est avantageusement diffusé depuis au moins une bonbonne de gaz qui est comprise, de préférence, dans un organe du châssis peu excentré par rapport à l'axe centrale du dispositif de luminothérapie.

Avantageusement, le dispositif est fermé par le dessus par un capot de protection. Un tel capot protège le matériel des intempéries et peut éventuellement servir à rediriger l'air chaud, les faisceaux lumineux vers le sol et le dioxyde de carbone vers le sol.

Le dispositif intègre avantageusement au moins un système d'alimentation électrique autonome, tel qu'une batterie, qui alimente au moins l'un des éléments suivants : la lampe, le système de chauffage, le moyen de motorisation, le moyen de commande, le moyen de traitement de données et le moyen de guidage. Un système de batterie intégré au dispositif pourra être utilisé afin d'alimenter les différents éléments cités ci-dessus. La recharge des batteries se fait de façon autonome grâce à une borne de recharge installée sur le terrain. Le dispositif est déplacé à cette borne lorsque le besoin s'en fera ressentir. L'alimentation électrique peut également être réalisée à l'aide d'un câble électrique branché sur le réseau électrique voisin. Un touret est alors installé sur le pourtour du terrain et sur le dispositif selon l'invention afin que celui-ci soit tiré ou rembobiné suivant le sens d'avancement du dispositif. Des panneaux photovoltaïques permettant de fournir au dispositif une alimentation électrique sont avantageusement utilisés. Ceci confère au dispositif selon l'invention une totale indépendance de toute source énergétique extérieure.

Le dispositif selon l'invention comporte avantageusement un joint brosse qui s'étend en périphérie du châssis sur la face adaptée à être positionnée en regard du sol. Avantageusement, la périphérie de cette face du châssis est totalement fermée latéralement par des joints brosses. De tels joints garantissent une isolation thermique du couvert végétal en évitant les échanges d'airs sous la structure du dispositif. Ceci permet de créer un espace confiné où les facteurs de croissance pour la plante sont optimaux en termes de lumière, de chaleur et/ou de dioxyde de carbone.

La description détaillée qui suit présente des modes de réalisation de la présente invention, uniquement donnés à titre illustratif et qui ne doivent nullement être interprétés comme limitatifs, et leurs figures annexées parmi lesquelles :
- la figure 1 représente, vu en perspective, un mode de réalisation d'un dispositif conforme à la présente invention avec le capot de protection partiellement non représenté afin de pouvoir visualiser l'intérieur du dispositif ;
- la figure 2 représente, vu en perspective, le dispositif de la figure 1 à proximité des goals et des tribunes ;
- la figure 3 représente, vu de dessus, le système de chauffage du dispositif selon la figure 1 ou 2 ;
- la figure 4 représente, vu en coupe transversale, l'intérieur du dispositif montré à la figure 1 ;
- la figure 5 représente, vu de dessus, plusieurs dispositifs selon l'invention en fonctionnement sur un terrain de football ; et
- la figure 6 représente, vu en perspective, un autre mode de réalisation d'un dispositif de luminothérapie selon l'invention.

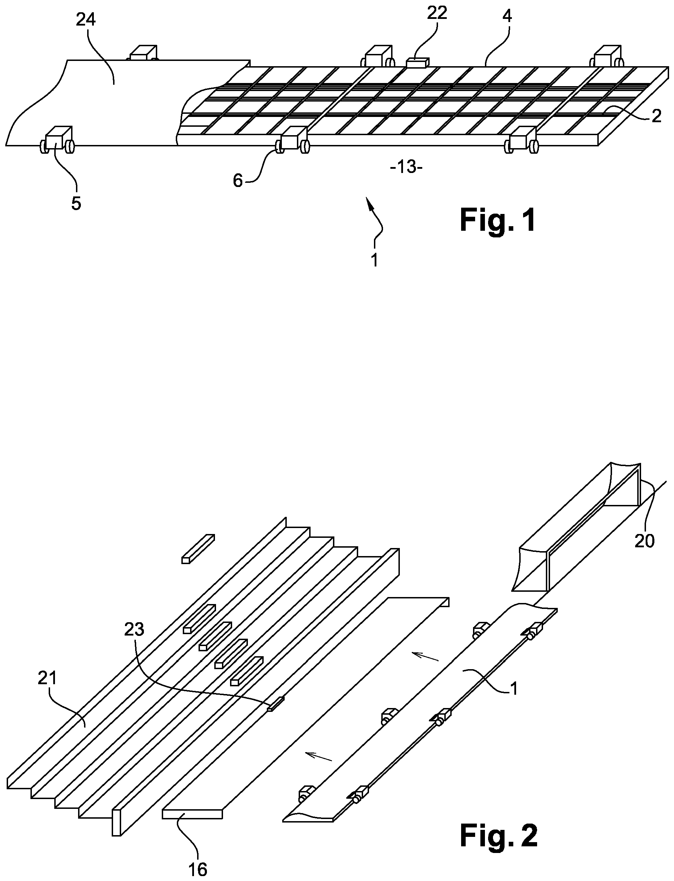

La figure 1 montre un mode de réalisation d'un dispositif 1 selon l'invention comportant des panneaux lumineux 2 intégrants un ensemble de LEDs. Les panneaux 2 sont installés sur un châssis 4 comportant une structure métallique dont la vitesse et le sens d'avancement est régulé par des moteurs (ou moyen de motorisation) 5 pour la mise en rotation de roues orientables 6 équipées de pneus.

Les panneaux lumineux 2 sont équipés de LED, ceci permet un meilleur éclairage, étant donné que ce mode d'éclairage est plus sélectif en termes de longueurs d'onde, notamment dans le bleu et le rouge qui sont des couleurs de choix pour la photosynthèse. De plus, l'éclairage à base de LEDs permet de réaliser une économie de consommation d'énergie très importante.

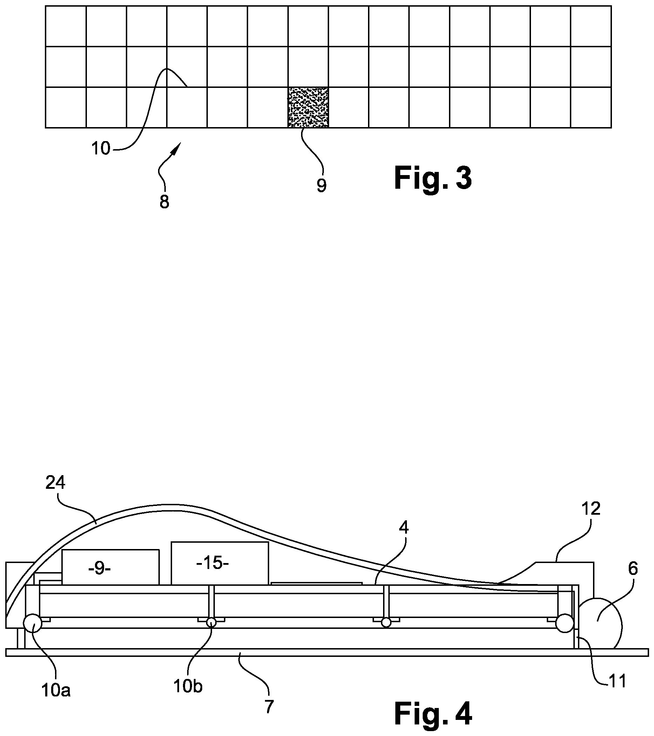

Le dispositif 1 permet également de fournir au couvert végétal 7 de la chaleur et du CO₂ pour activer la photosynthèse responsable du développement du sol végétal. On chauffe à l'aide d'un système de chauffage 8 reposant sur le principe d'insufflation d'air, éventuellement enrichi en CO₂, à l'aide d'un propulseur d'air chaud 9 qui alimente des tubes perforés 10a prévus pour être positionnés au dessus du gazon sur des cornières supports 10b (voir la figure 3). Ces tubes perforés 10a et 10b sont répartis sur toute la surface prévue pour être en regard du sol à traiter, ils sont positionnés au niveau des cornières, c'est-à-dire des jointures entre deux panneaux lumineux 2. Il est important que la partie perforée des tubes 10a et 10b soit orientée vers le sol. L'air chaud est transféré sous la structure de panneaux lumineux 2, ce qui permet un chauffage optimal du couvert végétal 7. La présence de joints brosses 11 répartis tout autour du dispositif, et en contact du sol, offre une meilleure étanchéité pour retenir la chaleur.

Les ensembles, ci-après dénommés éléments motorisés 12, constitués par les moteurs 5, et leurs carters, ainsi que les roues 6, sont proportionnés et disposés afin de répartir au mieux les charges sur le couvert végétal 7 traité (voir la figure 4). Les éléments motorisés 12 sont reliés à un système de guidage laser 13 (ou alternativement un GPS) intégrant une source laser, qui permet de gérer la vitesse, le sens et la direction. La source laser émet un laser depuis son boitier positionné sur l'élément motorisé 12, lequel réfléchit sur une cible installée à une extrémité du terrain.

Un point particulièrement innovant du dispositif est son indépendance énergétique grâce à la présence d'une batterie 15 sur le châssis. Ceci permet un fonctionnement sans interruption pendant une longue période de travail, sans pour autant être gêné par la gestion d'un câble souvent problématique. La batterie se recharge au niveau du conteneur de rangement 16, grâce à des prises et des bornes présentes sur le dispositif 1 et son conteneur de rangement 16.

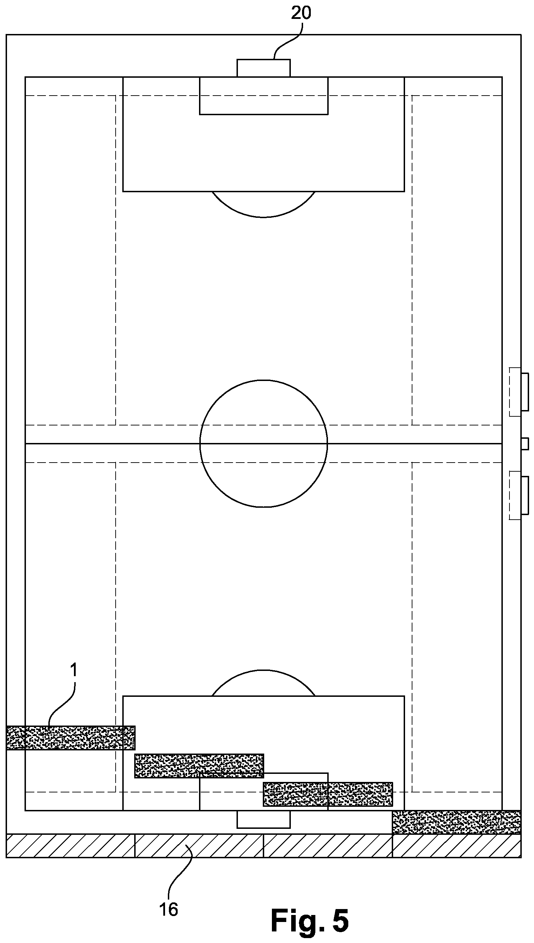

Les dispositifs 1 sont implantés sur la largeur du terrain, comme représenté à la figure 5. Plusieurs éléments lumineux pourront être associés sur la même surface afin de garantir un traitement total de celle-ci en un minimum de temps. La vitesse de chaque élément est réglable (de 0 à 20 m.h⁻¹) afin de garantir un traitement plus long sur les surfaces les plus endommagées comme par exemple les surfaces de réparation de terrain de football, ou encore les zones ombragées par les tribunes.

Les dispositifs 1 peuvent être actifs 24h sur 24h, ceci permet une pousse quasi continue sur l'ensemble de la journée du couvert végétal 7. Lors des phases d'entretien ou d'utilisation de la surface traitée (par exemple durant un match de football), les dispositifs 1 peuvent être rangés sur le terrain même, comme montré à la figure 2. Grâce aux conteneurs de rangement 16 dissimulés dans la zone de dégagement se trouvant entre les buts 20 et les tribunes 21, on peut d'une part protéger le dispositif 1, et d'autre part le rendre totalement autonome sans aucune intervention d'opérateur. De plus, il servira aussi de lieu de remise en charge des batteries 15 lithiums à l'aide de prises de rechargement 22 et de bornes de rechargement 23 situées sur l'élément mobile et le rangement, comme illustré aux figures 1 et 2.

Dans le cas où l'installation de ces rangements n'est pas envisageable, un système d'attache est installé sur le dispositif 1 afin qu'il puisse être amené hors de la surface traitée à l'aide d'un microtracteur ou de tout autre engin adapté.

Un capot de protection 24 ferme le dispositif 1 par le haut pour le protéger des intempéries, et ceci permet également de rediriger la lumière et l'air chaud, éventuellement enrichi en dioxyde de carbone, vers le sol.

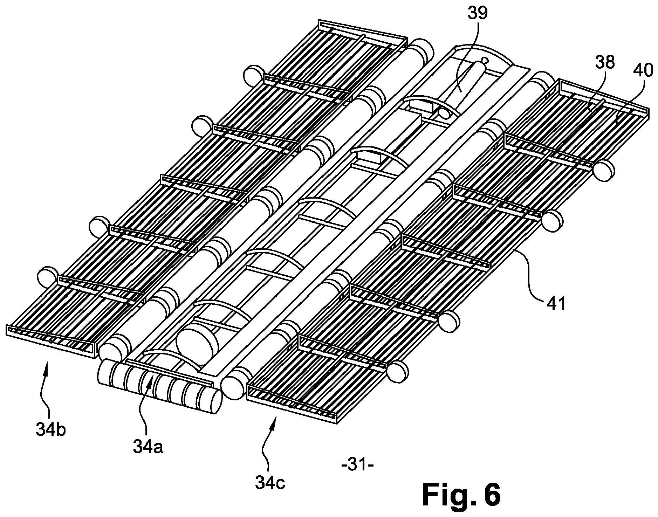

Un autre mode de réalisation de dispositif de luminothérapie 31 est montré sur la figure 6 (sans les capots de protection pour voir l'intérieur du dispositif). Ce dispositif 31 comprend un châssis composé d'un bloc central 34a depuis lequel s'étirent deux panneaux rabattables latéraux 34b et 34c dudit châssis.

Les panneaux latéraux comportent des rampes électriques qui alimentent des lampes portée par ces panneaux, et qui sont composées de barrettes de LEDs. Les panneaux 34b et 34c sont prévus pour être positionnés en regard du sol végétal, en particulier un gazon, et pour la maintenance ou le stockage, ils peuvent être relevés. Le bloc central du châssis 34a intègre des moteurs, éventuellement des batteries, et quatre roues motrices parmi quatorze roues qui sont positionnées aux interfaces entre le bloc central 34a et les panneaux latéraux. Ce bloc central 34a comporte un propulseur d'air chaud remplissant la fonction de moyen de chauffage, qui alimente en air chaud des tubes perforés 38 sur une face des panneaux latéraux 34b et 34c auxquels ils appartiennent. Le bloc central comporte aussi une bombonne de dioxyde de carbone 39 reliée à des tubes perforés 40 sur une face des panneaux latéraux 34b et 34c auxquels ils appartiennent. Les panneaux latéraux 34b et 34c ont une structure allégée composée de cadre tubulaires en aluminium 41, et ne portent pas les éléments lourds du dispositif, tels que le moteur, la batterie, les réservoirs de gaz, ou bien encore les moyens de guidage, de commande ou de traitement de donnée, qui équipent le bloc central 34a du châssis.

## Revendications

1. Dispositif (1, 31) pour la luminothérapie et le chauffage d'un couvert végétal ou de massifs d'algues, comprenant une lampe apte à activer la photosynthèse, un châssis (4) portant ladite lampe, un moyen de déplacement motorisé monté sur le châssis, **caractérisé en ce que** le dispositif comporte un moyen de guidage, un moyen de commande du moyen de déplacement motorisé et un moyen de traitement de données, d'une part, prévu pour analyser au moins une première information de position du moyen de guidage et, d'autre part, configuré pour activer le moyen de commande du moyen de déplacement motorisé en fonction de l'information de position.

2. Dispositif (1, 31) selon la revendication 1, dans lequel le moyen de déplacement motorisé est avantageusement un train roulant motorisé orientable, adapté pour évoluer sur des surfaces engazonnées.

3. Dispositif (1, 31) selon l'une des revendications 1 ou 2, dans lequel le châssis comporte un panneau rabattable (34a, 34b) qui porte ladite lampe.

4. Dispositif (1, 31) selon l'une des revendications 1 à 3, dans lequel le moyen de traitement de données est prévu pour être positionné à distance dudit moyen de guidage et dudit moyen de commande avec lesquels le moyen de traitement échange des données en réception et en émission par radiofréquence.

5. Dispositif (1, 31) selon l'une des revendications 1 à 4, dans lequel le moyen de traitement de données est prévu pour analyser au moins une deuxième information de sens ou de direction.

6. Dispositif (1, 31) selon l'une des revendications 1 à 5, dans lequel ledit moyen de guidage est au moins l'un des éléments sélectionnés parmi un système de guidage laser (13) et un système de positionnement par satellite.

7. Dispositif (1, 31) selon l'une des revendications 1 à 6, dans lequel le moyen de guidage est un système de guidage laser (13) et ledit moyen de traitement de données est prévu pour analyser une information de vitesse du rayon lumineux.

8. Dispositif (1, 31) selon l'une des revendications 1 à 7, dans lequel la lampe comprend une diode électroluminescente.

9. Dispositif (1) selon l'une des revendications 1 à 8, dans lequel le spectre d'émission de la lampe est contenu dans au moins l'une des plages allant de 350 à 450 nm et de 520 à 710 nm ; et la puissance des lampes utilisées est avantageusement de 200 à 500 W/m².

10. Dispositif (1, 31) selon l'une des revendications 1 à 9, dans lequel le dispositif (1) comprend un système de chauffage (8).

11. Dispositif (1, 31) selon l'une des revendications 1 à 10, dans lequel le dispositif (1, 31) intègre des moyens d'injection de dioxyde de carbone afin de favoriser la croissance du tissu végétal.

12. Dispositif (1, 31) selon l'une des revendications 1 à 11, dans lequel le dispositif (1, 31) intègre au moins un système d'alimentation électrique autonome tel qu'une batterie (15) ou un système par alimentation par câble dont le déroulement et l'enroulage est géré par un touret intégré audit dispositif.

13. Dispositif (1, 31) selon l'une des revendications 1 à 12, dans lequel le dispositif (1, 31) comporte au moins un joint brosse (11) qui s'étend en périphérie dudit châssis (4) sur la face adaptée pour être positionnée en regard du couvert végétal (7).

## Patentansprüche

1. Gerät (1, 31) für Lichttherapie und Erwärmung einer Vegetationsdecke oder eines starken Algenteppichs, bestehend aus einer Lampe, die Photosynthese aktivieren kann, einem Rahmen (4), der besagte Lampe trägt, einem motorisierten Transportmittel, das auf den Rahmen montiert ist, **gekennzeichnet durch** den Fakt, dass das Gerät ein Führungselement enthält, ein Steuerelement des motorisierten Transportmittels und ein Datenverarbeitungselement, das einerseits dazu entworfen wurde, mindestens eine erste Positionsinformation des Führungselements zu analysieren und zum anderen, das aktivierende Steuerelement des motorisierten Transportmittels aufgrund der Positionsinformation zu konfigurieren.

2. Gerät (1, 31) gemäß Anspruch 1, bei dem das motorisierte Transportmittel ein sich vorteilhaft drehendes motorisiertes Fahrwerk und geeignet ist, sich auf einer Grasfläche zu bewegen.

3. Gerät (1, 31) gemäß Anspruch 1 oder 2, bei dem der Rahmen auf ein klappbares Panel (34 a, 34 b) montiert ist, auf welchem besagte Lampe installiert wurde.

4. Gerät (1, 31) gemäß Ansprüche 1 bis 3, bei dem das Datenverarbeitungselement so gestaltet wurde, dass es im Abstand vom Führungselement und dem Steuerelement positioniert wurde, mit dem das verarbeitende Element Empfangs- und Sendedaten über Hochfrequenz austauscht.

5. Gerät (1, 31) gemäß Ansprüche 1 bis 4, bei dem das Datenverarbeitungselement dafür entwickelt wurde, mindestens eine zweite Information oder Richtung oder Orientierung zu analysieren.

6. Gerät (1, 31) gemäß Ansprüche 1 bis 5, bei dem das entsprechende Führungselement mindestens eines der Elemente ist, die unter einer Laserstahlführung (13) und einem Satellitennavigationssystem ausgewählt wurden.

7. Gerät (1, 31) gemäß Ansprüche 1 bis 6, bei dem das Führungselement eine Laserstahlführung (13) ist und das Datenverarbeitungselement entwickelt wurde, um die Informationen der Geschwindigkeit des leuchtenden Lichtstrahls zu analysieren.

8. Gerät (1, 31) gemäß Ansprüche 1 bis 7, bei dem die Lampe eine Leuchtdiode enthält.

9. Gerät (1) gemäß Ansprüche 1 bis 8, bei dem das Emissionsspektrum der Lampe sich mindestens im Bereich von 350 bis 450 nm und 520 bis 710 nm befindet, und der für die Lampen verwendete Strom sich vorteilhaft zwischen 200 und 500 W/m² bewegt.

10. Gerät (1, 31) gemäß Ansprüche 1 bis 9, bei dem das Gerät (1) ein Heizsystem enthält (8).

11. Gerät (1, 31) gemäß Ansprüche 1 bis 10, bei dem das Gerät (1, 31) Kohlendioxideinbringungselemente integriert, um das Wachstum pflanzlichen Gewebes zu fördern.

12. Gerät (1, 31) gemäß Ansprüche 1 bis 11, bei dem das Gerät (1, 31) mindestens ein autonomes elektrisches Stromversorgungssystem wie z. B. eine Batterie (15) oder eine Stromleitung integriert, deren Einsatz und Aufwicklung durch eine Kabeltrommel erfolgt, die in diesem Gerät integriert ist.

13. Gerät (1, 31) gemäß Ansprüche 1 bis 12, bei dem das Gerät (1, 31) über mindestens eine Bürstenleiste (11) verfügt, die am äußeren Rand des Rahmens (4) auf der Seite verlängert ist, die dazu geeignet ist, der Vegetationsdecke zugewandt zu sein (7).

## Claims

1. Device (1, 31) for light therapy and heating of a vegetation cover or massive algal mats, comprising a lamp able to activate photosynthesis, a frame (4) bearing said lamp, a motorized means of transport installed on the frame, **characterized by** the fact that the device includes a guide element, a command element of the motorized means of transport and a data processing element, on the one hand, designed for analyzing at least a first position information of the guide element and, on the other hand, configured for activating the command element of the motorized means of transport depending on the position information.

2. Device (1, 31) according to claim 1, where the motorized means of transport is advantageously a rotating motorized running gear, adapted to move on grass surfaces.

3. Device (1, 31) according to claim 1 or 2, where the frame is fitted with a foldable panel (34a, 34b) on which said lamp is installed.

4. Device (1, 31) according to claims 1 to 3, where the data processing element is designed to be positioned at distance from the guide element and the command element with which the processing element exchanges reception and emission data through radiofrequency.

5. Device (1, 31) according to claims 1 to 4, where the data processing element is designed for analyzing at least a second information of direction or orientation.

6. Device (1, 31) according to claims 1 to 5, where the guide element in question is at least one of the elements selected among a laser guide system (13) and a satellite positioning system.

7. Device (1, 31) according to claims 1 to 6, where the guide element is a laser guide system (13) and the data processing element is designed for analyzing the luminous ray speed information.

8. Device (1, 31) according to claims 1 to 7, where the lamp includes a light-emitting diode.

9. Device (1) according to claims 1 to 8, where the lamp emission spectrum is included at least in the 350 to 450 nm and 520 to 710 nm range; and the power of the lamps used is advantageously situated between 200 and 500 W/m².

10. Device (1, 31) according to claims 1 to 9, where the device (1) includes a heating system (8).

11. Device (1, 31) according to claims 1 to 10, where the device (1, 31) integrates carbon dioxide injection elements in order to favor vegetable tissue growth.

12. Device (1, 31) according to claims 1 to 11, where the device (1, 31) integrates at least an autonomous electrical power supply system such as a battery (15) or a cable power supply whose deployment and winding is managed by a cable drum integrated in the device in question.

13. Device (1, 31) according to claims 1 to 12, where the device (1, 31) has at least a brush strip (11) extending at the periphery of the frame in question (4) on the side adapted for being positioned towards the vegetation cover (7).
